# DEMANDE DE BREVET EUROPEEN

(11) **EP 3 520 884 A1**
(43) Date de publication de la demande: **07.08.2019**
(21) Numéro de dépôt: 19155135.7
(22) Date de dépôt: 01.02.2019
(51) Int. Cl.: B01D 63/02, B01D 63/06, B01D 65/00, C10L 3/10

(54) **DISPOSITIF DE SEPARATION MEMBRANAIRE**

(30) Priorité: 06.02.2018 FR 1850964
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: ROUSSEL, Thierry, 38960 SAINT ETIENNE DE CROSSEY (FR)
(74) Mandataire: Laigneau, Amandine

(57) **Abrégé**

Dispositif de séparation membranaire comprenant une membrane tubulaire ou un ensemble cylindrique de membranes en fibres creuses limité(e) par une enveloppe tubulaire (1) reliant deux capuchons (2) percés de trous traversants (3) maintenus conjointement avec ladite enveloppe par deux systèmes de serrage et d'étanchéité, caractérisé en ce que :
- chaque système de serrage et d'étanchéité est un collier de serrage (4) muni d'un joint intégré présentant deux demi-parties indépendantes reliées entre elles en position de service au moyen d'au moins une vis (5) ou un boulon de serrage
- l'enveloppe tubulaire (1) présente un diamètre d et à chaque extrémité une gorge (6) apte à recevoir un bord du collier de serrage (4) d'un des deux systèmes de serrage et d'étanchéité, et
- chaque capuchon (2) est composé d'un fond bombé et d'une partie cylindrique présentant un diamètre D tel que D < d et une gorge (7) apte à recevoir un bord du collier de serrage 4 d'un des deux systèmes de serrage et d'étanchéité.

## Description

La présente invention est relative à un dispositif de séparation membranaire et à un module comprenant plusieurs de ces dispositifs.

Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL)...

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié. Une première étape consiste à comprimer le biogaz qui a été produit et acheminé à pression atmosphérique, cette compression peut être obtenue - de façon classique - via un compresseur à vis lubrifiée. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée; elle est donc particulièrement performante pour séparer le CO2 présent dans le biogaz, et en particulier dans le gaz de décharge.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CH4, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes.

Pour effectuer cette séparation membranaire, on connaît principalement deux types de membranes : les membranes tubulaires et les membranes en fibres creuses. Les membranes tubulaires peuvent être de type monocanal ou multicanaux et sont souvent de nature minérale. Dans le cas de membranes tubulaires multicanaux, les tubes sont regroupés en parallèle dans un module. Le perméat est récupéré à l'extérieur des tubes, dans l'enveloppe du module.

Les membranes en fibres creuses sont composées d'un ensemble de fibres creuses regroupées dans une enveloppe (formant le module). Elles sont uniquement de nature organique et ne possèdent pas de support textile (autosupportées). De même, elles ne sont souvent composées que d'un matériau, bien que des fibres creuses composites existent. La couche active (peau) et la sous couche poreuse sont intimement solidaires, ce qui permet de filtrer dans les deux sens.

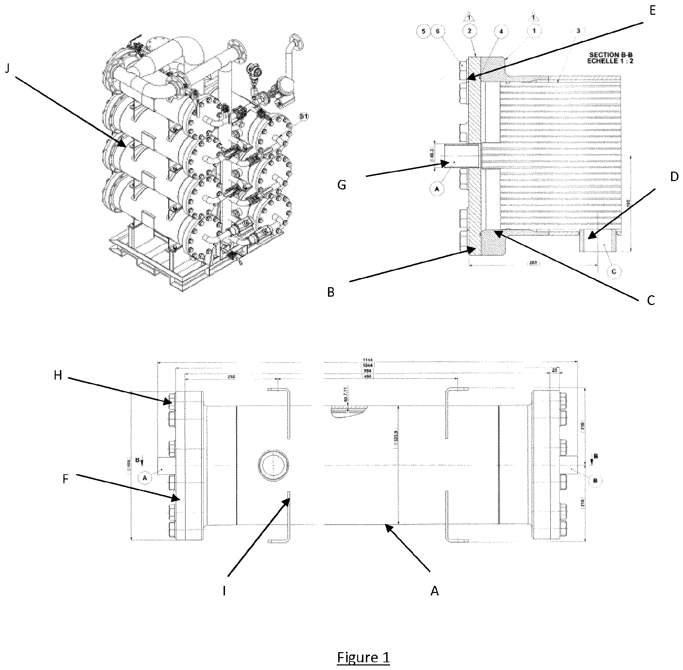

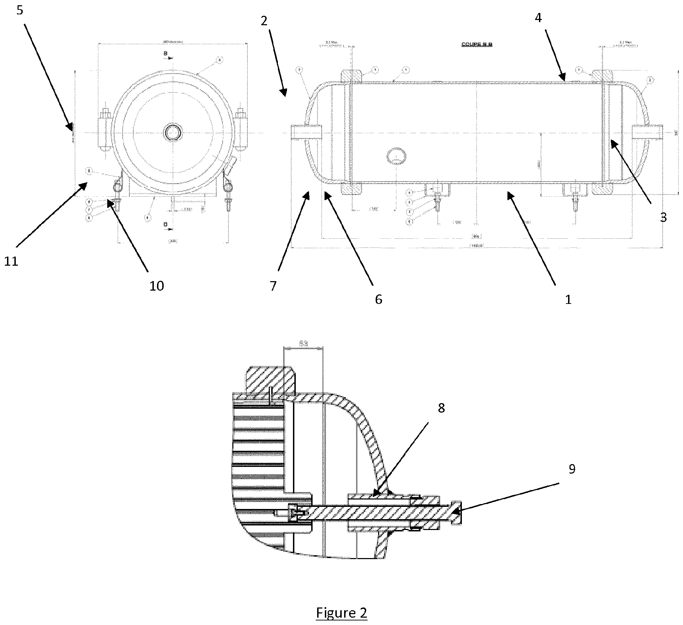

Jusqu'à présent, l'enveloppe de la membrane est constituée d'un tube cylindrique A de diamètre supérieur à celui de la membrane (Figure 1). Ce tube dispose d'une ouverture consistant en un manchon soudé permettant la sortie D du gaz perméat de l'enveloppe.

A chaque extrémité du tube sont soudés deux ensembles tubes - brides B percés sur leur pourtour de trous borgnes taraudés.

Ces ensembles tubes - brides B sont d'un diamètre intérieur au plus proche de celui de la membrane afin d'assurer l'étanchéité entre l'entrée / sortie gaz et la sortie D perméat de la membrane. Cette étanchéité est assurée par un joint torique placé dans une gorge C usinée à chaque extrémité de la membrane.

Sur chaque bride, deux fonds plats F percés sur leur diamètre extérieur de trous taraudés traversants, équivalents en nombre et en position à ceux des brides, viennent fermer l'enveloppe.

Ces fonds plats F ont en leur centre une ouverture consistant en un manchon soudé G permettant l'entrée / la sortie du gaz dans l'enveloppe.

Le serrage du fond plat sur la bride se fait à l'aide d'ensemble vis-rondelles H passant dans les trous taraudés correspondants des fonds plats et des brides.

L'étanchéité est assurée par un joint torique placé dans une gorge E, usinée sur chaque fond plat, qui vient s'écraser contre la bride lors du serrage.

Le supportage de l'enveloppe est assuré par 4 pièces métalliques I en L soudées sur l'enveloppe (par paires diamétralement opposées), pouvant se visser sur un support et permettant ainsi sur un module J de monter un nombre variable de membrane les unes sur les autres.
Cependant, les inconvénients principaux de ce type d'enveloppe sont :
- Pour assurer le montage / démontage des membranes, il est nécessaire de compenser les tolérances de fabrication et déformations dû aux soudures en réusinant précisément le diamètre intérieur des ensembles tubes - brides après fabrication et soudure avec le tube. Cependant même après réusinage le montage / démontage des membranes reste très difficile.
- Le positionnement des enveloppes sur module, très contraint du fait des pièces de supportage en L soudées, peut poser des problèmes.
- Sortir une membrane de son enveloppe nécessite de dévisser les deux fonds plats, puis de pousser manuellement la membrane hors de son enveloppe. Opération longue et très difficile du fait du nombre de vis et des forces de frottements en jeu.
Partant de là, un problème qui se pose est de fournir un dispositif de séparation membranaire amélioré.

Une solution de la présente invention est un dispositif de séparation membranaire comprenant une membrane tubulaire ou un ensemble cylindrique de membranes en fibres creuses limité(e) par une enveloppe tubulaire 1 reliant deux capuchons 2 percés de trous traversants 3 maintenus conjointement avec ladite enveloppe par deux systèmes de serrage et d'étanchéité, caractérisé en ce que :
- chaque système de serrage et d'étanchéité est un collier de serrage 4 muni d'un joint intégré présentant deux demi-parties indépendantes reliées entre elles en position de service au moyen d'au moins une vis 5 ou un boulon de serrage
- l'enveloppe tubulaire 1 présente un diamètre d et à chaque extrémité une gorge 6 apte à recevoir un bord du collier de serrage 4 d'un des deux systèmes de serrage et d'étanchéité, et
- chaque capuchon 2 est composé d'un fond bombé et d'une partie cylindrique présentant un diamètre D tel que D < d et une gorge 7 apte à recevoir un bord du collier de serrage 4 d'un des deux systèmes de serrage et d'étanchéité.
De préférence X < D avec X choisi de manière à assurer l'étanchéité entre l'enveloppe tubulaire et le capuchon.

Le serrage et l'étanchéité entre les capuchons et l'enveloppe tubulaire est assuré par la technologie collier type VICTAULIC : un joint circulaire de pratiquement la largeur du collier est positionné soit sur le capuchon soit sur l'enveloppe tubulaire, le capuchon et le tube sont approchés l'un de l'autre, puis le joint est positionné à cheval sur le capuchon et le tube. Le collier vient ensuite se refermer sur le joint et l'ensemble est positionné afin que les bords du collier viennent se placer dans les gorges prévues à cet effet, l'une usinée sur l'extérieur du capuchon et l'autre sur l'extérieur du tube. Enfin le serrage du collier est effectué à l'aide des deux vis à ses extrémités, le joint ainsi écrasé vient assurer l'étanchéité entre les deux éléments.
Selon le cas, le dispositif de séparation membranaire peut présenter une ou plusieurs des caractéristiques suivantes :
- les trous traversants 3 des capuchons 2 percés comprenant chacun un manchon taraudé (8) de manière à permettre l'introduction d'un outil de démontage 9 ;
- le collier de serrage comprend deux vis permettant de relier entre elles deux demi-parties indépendantes ;
- la partie cylindrique des capuchons présentent une hauteur comprise entre 20 mm et 60 mm. De préférence cette hauteur est comprise entre l'épaisseur du joint torique placé dans la gorge usinée du et cette même épaisseur de joint plus la différence de longueur entre l'enveloppe tubulaire la plus longue et l'enveloppe tubulaire la plus courte que l'on souhaite installer divisée par deux ;
- la partie cylindrique du capuchon 2 présente un diamètre D compris entre 100 et 400 mm ;
- l'enveloppe tubulaire 1 présente un diamètre d compris entre 100 et 400 mm ;
- l'enveloppe tubulaire 1 présente une longueur comprise entre 780 et 830 mm ;
- chacune des gorges 6 de l'enveloppe tubulaire 1 est située à une distance comprise entre 12 et 25 mm de l'extrémité de l'enveloppe qui lui est la plus proche ;
- la gorge 7 de chaque capuchon 2 est située à une distance comprise entre 12 et 25 mm de l'extrémité dudit capuchon ;
A titre d'exemples le dispositif pourra avoir les caractéristiques suivantes :
- diamètre D du capuchon = 152.35 mm + ou - 0.1 mm,
- diamètre d de l'enveloppe tubulaire = 159.2 mm,
- hauteur de la partie cylindrique du capuchon = 47 mm,
- distance entre les gorges de l'enveloppe tubulaire et les extrémités les plus proches de l'enveloppe tubulaire = 16.60 mm + ou -0.76 mm,
- distance entre les gorges des capuchons et les extrémités des capuchons : 16.60 mm + ou -0.76 mm ; et
- longueur de l'enveloppe tubulaire = 812 mm.
ou les caractéristiques suivantes :
- diamètre D du capuchon = 301.7 mm + ou - 0.1 mm,
- diamètre d de l'enveloppe tubulaire = 309.68 mm,
- hauteur de la partie cylindrique du capuchon = 40 mm,
- distance entre les gorges de l'enveloppe tubulaire et les extrémités les plus proches de l'enveloppe tubulaire = 19.05 mm + ou -0.76 mm,
- distance entre les gorges des capuchons et les extrémités des capuchons : 19.05 mm + ou -0.76 mm ; et
- longueur de l'enveloppe tubulaire = 800 mm.
La présente invention a également pour objet un module de séparation membranaire comprenant :
- au moins deux dispositifs de séparation membranaire selon l'invention,
- un support, et
- au moins deux couples de pièces métalliques 10 vissées au support et présentant une forme de berceau, chaque couple de pièces métalliques recevant un dispositif de séparation membranaire. De préférence, ledit module comprend au moins un collier de maintien (11) par dispositif de séparation membranaire permettant de maintenir ledit dispositif de séparation membranaire sur le couple de pièces métalliques.
Chaque collier de maintien sera de préférence vissé au support.

Dans le cadre de la présente invention l'enveloppe tubulaire se pose sur deux pièces métalliques en berceaux pouvant se visser sur un support et permettant ainsi sur un module de monter un nombre variable de membrane les unes à côté des autres. Une fois la membrane en position, deux colliers du commerce indépendants des pièces métalliques et se vissant sur le même support que les pièces métalliques viennent maintenir l'enveloppe en position. Notons qu'il n'y a pas de contraintes de soudage entre l'enveloppe tubulaire et les pièces métalliques puisque l'enveloppe tubulaire est uniquement posée sur les pièces métalliques en berceaux.
Les avantages du dispositif et du module de séparation membranaire selon l'invention sont les suivants :
- Le montage / démontage de la membrane est facilité par la flexibilité de la liaison capuchon-enveloppe tubulaire qui permet au capuchon de se positionner de telle manière à récupérer facilement les tolérances de fabrication.
- Le poids d'un corps est réduit de façon significative ce qui facile le montage et le transport.
- Le supportage de l'enveloppe sur les pièces métalliques en berceaux et le maintien par des colliers indépendants permet un positionnement peu contraignant et facilite encore plus l'installation des membranes sur un support tel qu'un module.
- Sortir une membrane de son enveloppe est beaucoup plus simple et beaucoup moins long grâce à l'utilisation de l'outillage :
Du côté où l'on souhaite faire sortir la membrane, on extrait le fond facilement grâce au collier VICTAULIC, aucune vis / goujons n'est à démonter.
Du côté opposé à celui où l'on souhaite extraire la membrane, on visse simplement l'outil de montage dans le manchon taraudé à l'aide d'une clé, celui-ci va venir pousser la membrane jusqu'à son extraction. -Les risques de fuites de gaz vers l'extérieur de l'enveloppe membranes sont diminués du fait de la disparition de l'ensemble gorges -joints toriques.
Le module de séparation membranaire selon l'invention sera de préférence utilisé pour la production de méthane à partir de biogaz.

## Revendications

1. Dispositif de séparation membranaire comprenant une membrane tubulaire ou un ensemble cylindrique de membranes en fibres creuses de nature organique permettant la production de méthane à partir de biogaz et limité(e) par une enveloppe tubulaire (1) reliant deux capuchons (2) percés de trous traversants (3) maintenus conjointement avec ladite enveloppe par deux systèmes de serrage et d'étanchéité, **caractérisé en ce que** :
- chaque système de serrage et d'étanchéité est un collier de serrage (4) muni d'un joint intégré présentant deux demi-parties indépendantes reliées entre elles en position de service au moyen d'au moins une vis (5) ou un boulon de serrage
- l'enveloppe tubulaire (1) présente un diamètre d et à chaque extrémité une gorge (6) apte à recevoir un bord du collier de serrage (4) d'un des deux systèmes de serrage et d'étanchéité, et
- chaque capuchon (2) est composé d'un fond bombé et d'une partie cylindrique présentant un diamètre D tel que D < d et une gorge (7) apte à recevoir un bord du collier de serrage 4 d'un des deux systèmes de serrage et d'étanchéité.

2. Dispositif selon la revendication 1, **caractérisé en ce que** les trous traversants (3) des capuchons (2) percés comprenant chacun un manchon taraudé (8) de manière à permettre l'introduction d'un outil de démontage (9).

3. Dispositif selon l'une des revendications 1 ou 2, **caractérisé en ce que** le collier de serrage comprend deux vis permettant de relier entre elles deux demi-parties indépendantes.

4. Dispositif selon l'une des revendications 1 à 3, **caractérisé en ce que** la partie cylindrique des capuchons présentent une hauteur comprise entre 20 mm et 60 mm.

5. Dispositif selon l'une des revendications 1 à 4, **caractérisé en ce que** la partie cylindrique du capuchon (2) présente un diamètre D compris entre 100 et 400 mm.

6. Dispositif selon l'une des revendications 1 à 5, **caractérisé en ce que** l'enveloppe tubulaire (1) présente un diamètre d compris entre 100 et 400 mm.

7. Dispositif selon l'une des revendications 1 à 6, **caractérisé en ce que** l'enveloppe tubulaire (1) présente une longueur comprise entre 780 et 830 mm.

8. Dispositif selon l'une des revendications 1 à 7, **caractérisé en ce que** chacune des gorges (6) de l'enveloppe tubulaire (1) est située à une distance comprise entre 12 et 25 mm de l'extrémité de l'enveloppe qui lui est la plus proche.

9. Dispositif selon l'une des revendications 1 à 8, **caractérisé en ce que** la gorge (7) de chaque capuchon (2) est située à une distance comprise entre 12 et 25 mm de l'extrémité dudit capuchon.

10. Module de séparation membranaire comprenant :
- au moins deux dispositifs de séparation membranaire selon l'une des revendications 1 à 9,
- un support, et
- au moins deux couples de pièces métalliques (10) vissées au support et présentant une forme de berceau, chaque couple de pièces métalliques recevant un dispositif de séparation membranaire.

11. Module selon la revendication 10, **caractérisé en ce que** ledit module comprend au moins un collier de maintien (11) par dispositif de séparation membranaire permettant de maintenir ledit dispositif de séparation membranaire sur le couple de pièces métalliques.

12. Module selon la revendication 11, **caractérisé en ce que** chaque collier de maintien est vissé au support.

13. Utilisation d'un module de séparation membranaire selon l'une des revendications 10 à 12 pour la production de méthane à partir de biogaz.
